Europäisches Patentamt

European Patent Office

Office européen des brevets

(19)

(11) Numéro de publication: **0 066 795**
**B2**

(12) **NOUVEAU FASCICULE DE BREVET EUROPEEN**

(45) Date de publication du nouveau fascicule du brevet: **23.01.91**

(51) Int. Cl.⁵: **F 16 K 1/12**, F 16 K 31/363

(21) Numéro de dépôt: **82104643.0**

(22) Date de dépôt: **27.05.82**

(54) **Vanne d'arrêt à fermeture rapide pour fluide compressible.**

(30) Priorité: **01.06.81 FR 8110771**

(43) Date de publication de la demande:
**15.12.82 Bulletin 82/50**

(45) Mention de la délivrance du brevet:
**23.07.86 Bulletin 86/30**

(45) Mention de la decision concernant l'opposition:
**23.01.91 Bulletin 91/04**

(84) Etats contractants désignés:
**AT BE CH DE FR GB IT LI LU NL SE**

(56) Documents cités:
CH-A- 550 351
DE-B-1 096 139
FR-A-1 558 944
FR-A-2 109 136
FR-A-2 130 794
FR-A-2 226 603
US-A-2 919 714
US-A-3 155 108
US-A-3 587 622

"Technische Rundschau Sulzer" 2/1973, S. 132-137

(73) Titulaire: **ALSTHOM**
**38, avenue Kléber**
**F-75784 Paris Cédex 16 (FR)**

(72) Inventeur: **Bessay, Raymond**
**8, rue de Stockholm**
**F-90000 Belfort (FR)**

(74) Mandataire: **Weinmiller, Jürgen et al**
**Lennéstrasse 9 Postfach 24**
**D-8133 Feldafing (DE)**

EP 0 066 795 B2

Courier Press, Leamington Spa, England.

# Description

La présente invention a trait à une vanne d'arrêt à écoulement axial concentrique et à fermeture rapide selon le préambule de la revendication 1.

Une telle vanne d'arrêt est connue du document TECHNISCHE RUNDSCHAU SULZER 2/1973 (pages 132 à 137, et notamment figures 15 et 21). La commande de cette vanne d'arrêt, selon la figure 15, prévoit, outre les caractéristiques présentes dans le préambule des revendications indépendantes 1 à 3, une canalisation (b), qui est reliée à la cavité définie entre les parties fixe et mobile de la vanne d'arrêt. Cette canalisation comporte une vanne auxiliaire (A') et permet, à elle seule, d'appliquer à la cavité soit la pression d'entrée soit la pression inférieure selon la position respective de la vanne auxiliaire.

Dans la vanne décrite ci-dessus, on ne prévoit cependant pas de moyens pour freiner le clapet en fin de course de fermeture. Or l'effort de fermeture appliqué au clapet en fin de course de fermeture est plusieurs fois plus élevé qu'en fin de course, c'est pourquoi, il est intéressant pour des questions de tenue mécanique de freiner ce clapet en fin de course.

L'invention a pour but de proposer une vanne répondant aux besoins cités ci-dessus.

Ce but est atteint par une vanne telle que définie dans l'une des revendications 1 à 3.

En ce qui concerne des perfectionnements de cette vanne, référence est faite aux revendications dépendantes 4 à 6.

L'invention va maintenant être décrite plus en détail en se référant à un mode de réalisation particulier cité à titre d'exemple non limitatif et représenté sur les dessins annexés.

La figure 1 représente la vanne selon l'invention en position d'ouverture.

La figure 2 représente la vanne selon l'invention en position de fermeture.

La figure 3 représente une variante de réalisation de l'invention.

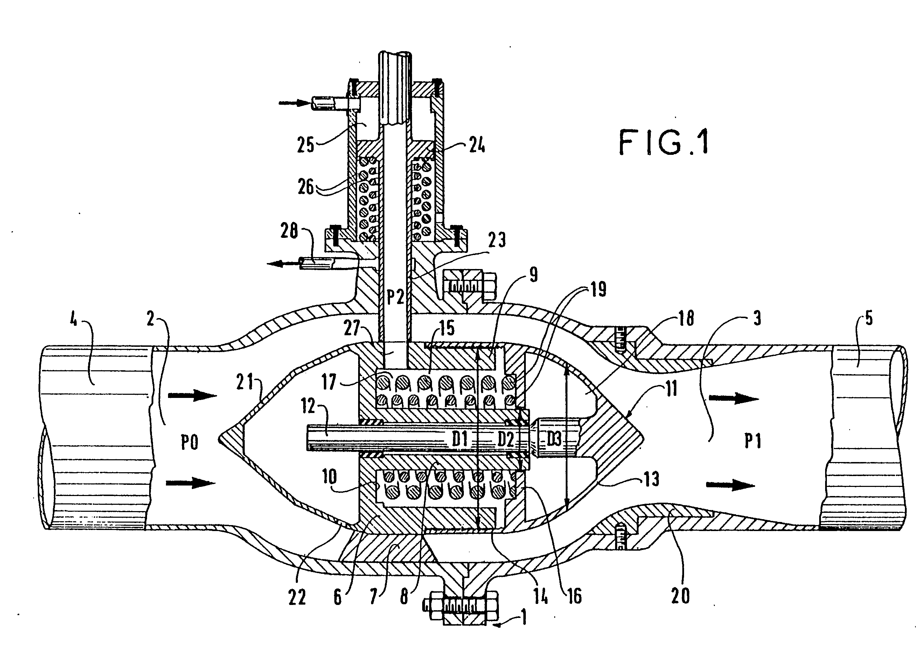

La vanne selon la figure 1 comporte un corps 1 ayant une entrée 2 et une sortie 3 coaxiales avec le corps 1. L'entrée 2 se poursuit par une tuyauterie d'arrivée 4 et la sortie 3 par une tuyauterie de sortie 5, les deux tuyauteries étant coaxiales avec le corps 1.

La vanne comprend également une partie fixe 6 disposée à l'intérieur du corps 1 et reliée au corps 1 par quelques nervures 7.

La partie fixe 6 comporte un cylindre 8 de diamètre D2 et un cylindre 9 de diamètre D1 coaxiaux avec le corps 1, le cylindre 9 entourant le cylindre 8.

Les deux cylindres 8 et 9 sont réunis par un fond 10 en forme d'anneau.

La vanne comporte également une partie mobile 11 comprenant une tige de guidage 12 supportant un clapet (= surface d'obturation) 13 dont la paroi latérale forme un cylindre 14 muni intérieurement de lamelles d'étanchéité.

La tige 12 coulisse dans le cylindre 8 et le cylindre 14 se meut à l'extérieur du cylindre 9.

Le groupement partie fixe 6 et partie mobile 11 définit une cavité interne 15 limitée par les cylindres 8 et 9 et le fond 10 de la partie fixe 6 et la paroi interne du clapet 13. Cette cavité 15 débouche à l'extérieur de la partie fixe par un orifice 27 ménagé dans le cylindre 9.

Une nervure interne 16 en forme d'anneau est solidaire de la paroi du clapet 13 et divise la cavité 15 en deux chambres 17 et 18.

En position d'ouverture, le cylindre 8 coopère avec la nervure 16 pour séparer la chambre 17 de la chambre 18.

Dans la chambre 17 est disposé un ou plusieurs ressorts 19, dont une extrémité s'applique sur le fond 10 et l'autre extrémité est appliquée sur la nervure 16.

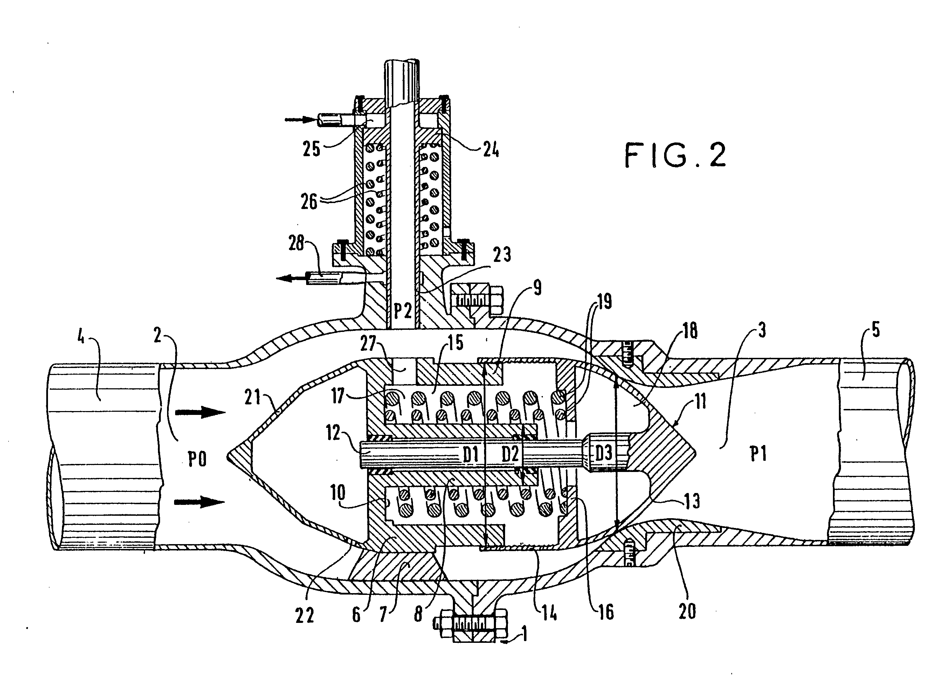

En position de fermeture (voir figure 2), le clapet 13 s'applique sur un siège 20 solidaire de la sortie 3 et de diamètre D3.

La partie fixe 6 comporte sur la face opposée au clapet 13 un capot 21 de forme aérodynamique et est munie d'une ouverture 22.

Une canalisation 23 mobile fait communiquer la cavité 15 avec un espace à une pression p2.

Cette canalisation est mue par le piston 24 d'un servomoteur. Du fluide sous pression peut être injecté dans l'espace 25 situé au-dessus du piston 24 et ce fluide pousse la canalisation 23 contre l'orifice 27 de la cavité 15. Lorsque cette pression de fluide disparaît, un ressort 16 disposé en-dessous du piston 24 écarte la canalisation de l'orifice 27. Une aspiration 28 à une pression inférieure à la pression atmosphérique disposée le long de la canalisation 23 empêche les fuites vers l'extérieur du fluide compressible.

La pression p2 est choisie nettement inférieure à la pression Po du fluide, par exemple de la vapeur, à l'entrée du corps 1 de la vanne.

En position d'ouverture de la partie mobile 11, la canalisation 23 est appliquée contre l'orifice 27 et il règne à l'intérieur de la cavité 15 la pression p2.

Le clapet 13 est soumis à la force f1 du ou des ressorts 19 et à l'effort f2 dû au passage du fluide le long du clapet 13 qui tendent tous deux à faire déplacer le clapet 13 sur son siège 20.

Dans le sens inverse, il s'exerce une différence de pression Po-p2 sur l'anneau de diamètre extérieur D1 et de diamètre intérieur D3. La force F en résultant est nettement supérieure aux forces f1 et f2 qui tendent à pousser le clapet 13 vers son siège 21.

Lorsque la pression de fluide disparaît dans l'espace 25, la canalisation 23 est retirée de l'entrée 27 et le fluide à la pression Po s'engouffre dans la cavité 15. Nous ne tiendrons pas compte, dans un premier temps, de la séparation en deux chambres de la cavité 15 par la nervure 16.

La pression à l'intérieur de la cavité 15 passe plus ou moins rapidement de p2 à Po et la force due à la différence entre la pression du fluide et la pression à l'intérieur de la cavité tend à s'annuler, si bien que sous l'effet des forces f1 et f2, le clapet 13 est poussé vers son siège. Il faut remarquer que l'effort de fermeture f2 augmente considérablement en fonction de la course du clapet.

Vers la fin de course, la pression aval du clapet p1 chute notablement, ce qui augmente l'effort de fermeture dû au passage du fluide le long du clapet 13. Par des mesures expérimentales, on a aussi relevé un effort en fin de course cinq fois plus élevé qu'en début de course.

C'est pourquoi il est intéressant, pour des questions de tenue mécanique, de freiner en fin de course le clapet 13, ce qui est possible grâce à la nervure 16. En effet, cette nervure entoure en position d'ouvertue le cylindre 8, mais avec un très léger espace entre les deux, si bien qu'il règne la pression p2 aussi bien dans la chambre 18 que dans la chambre 17.

Lorsque la canalisation 23 est enlevée, le fluide à pression Po s'engouffre dans la chambre 17 par l'orifice 27. Il s'ensuit que le clapet 13 part sous l'effet des forces f1 et f2 vers son siège 20. Aprés avoir parcouru une certaine course, la nervure 16 se dégage du cylindre 8 mettant brusquement en communication la chambre 18 avec la chambre 17.

Il en résulte momentanément une diminution de la pression dans la cavité 15 et les forces tendant à la fermeture peuvent être réduites voire annulées ou même inversées.

Ceci peut être obtenu par la choix du rapport convenable des volumes des chambres 17 et 18 ainsi que par le choix du pourcentage de course pour lequel l'amortisseur entre en action.

Le fluide à pression Po continue par ailleurs à arriver par l'orifice 27, ce qui atténue l'effet amortisseur avec le temps.

Il est ainsi possible de maîtriser convenablement, lors d'une fermeture du clapet 13, la valeur de l'accélération en fonction du temps, de manière à réaliser la fermeture dans le temps nécessaire, sans craindre le matage ou la déformation des pièces entrant en contact, clapet 13 et siège 20.

Lorsque le clapet 13 est fermé (figure 2) et que l'on désire ouvrir, on envoie la pression de fluide dans l'espace 25 et la canalisation 23 vient s'appliquer sur l'orifice 27, la pression p dans la cavité 15 va passer de Po à p2. Il s'exerce alors une pression différentielle Po-p sur l'anneau de diamètre extérieur D1 et de diamètre intérieur D3. Lorsque l'effort dû à cette pression différentielle équilibre les efforts dûs au ressort f1 et à la pression p-p1 (p1 est en général inférieure ou égal à p2) sur un cercle de diamètre D3 (en négligeant l'effort dû à la pression Po sur l'extrémité de la tige 11), le clapet 13 décolle du siège 20, la pression en aval du clapet 13 augmente tandis que la pression p de la cavité 15 diminue jusqu'a p2 et le clapet 13 revient dans sa position d'ouverture, le cylindre 14 venant se bloquer contre un épaulement du cylindre 9 et un renflement de la tige 12 venant à proximité du cylindre 8.

Il convient de choisir p2 suffisamment faible pour que le décollement soit possible.

Grâce, d'une part, au montage coaxial de l'entrée 2 et de la sortie 3 et, d'autre part, à la forme aérodynamique de la paroi externe du groupement de la partie fixe 6 et de la partie mobile 11 qui coopère avec la forme de la paroi interne du corps 1, les pertes de charge sont très réduites lorsque la vanne est ouverte. En effet, il n'y a pas de déviation dans la direction du flux et il n'y a pas de discontinuité dans les sections de passage du fluide.

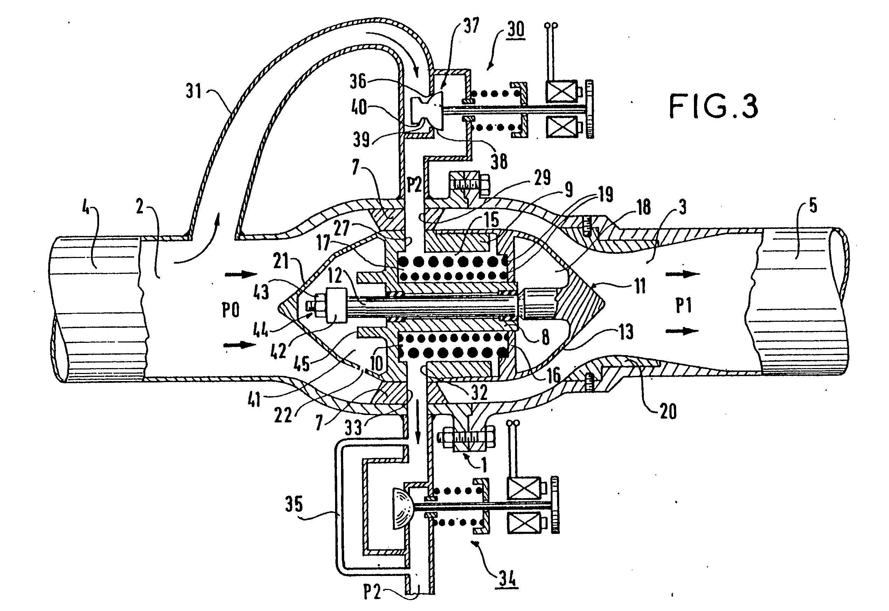

La vanne représentée à la figure 3 comporte les mêmes éléments que celle représentée aux figures précédentes, sauf les moyens de mise sous les pression Po ou p2 de la cavité 15, ainsi que des moyens de freinage de la partie mobile en fin de course.

La cavité 15 comporte un premier orifice 27 percé dans la paroi de la partie fixe 6 et relié par une conduite 29 percée dans une nervure 7 et dans le corps 1 à une vanne auxiliare 30 disposée en dehors du corps 1. Cette vanne auxiliaire 30 est reliée à une canalisation 31 prenant du fluide à la pression Po en amont ou en aval de l'entrée 2.

La cavité 15 comporte un second orifice 32 percé dans la paroi de la partie fixe 6 et relié par une conduite 33 percée dans une nervure 7 et dans le corps 1 à une vanne auxiliaire 34 disposée en dehors du corps 1. Cette vanne auxiliaire 34 est reliée à une canalisation à pression p2. Une canalisation 35 de faible section est mise en dérivation entre l'entrée et la sortie de la vanne auxiliaire 34.

Le vanne auxiliaire 30 comporte une entrée de fluide 36 à la pression Po obturable par une tête mobile 37 qui comprend une partie hémisphérique 38 assurant l'obturation proprement dite de ladite entrée 36 lorsque la vanne auxiliaire 30 est fermée, une partie étranglée 39 qui au cours de l'ouverture de la vanne auxiliaire 30, se déplace à travers ladite entrée 36 permettant un fort débit de fluide dans ladite entrée 36 et une partie évasée 40 qui se trouve dans ladite entrée 36 lorsque la vanne auxiliaire 30 est complètement ouverte permettant un débit réduit de fluide dans ladite entrée 36.

Ainsi, lorsqu'on ouvre la vanne 30, la vanne 34 étant fermée, la partie hémisphérique 38 de la tête 37 décolle de l'entrée 36 et la partie étranglée 39 se déplace à travers l'entrée 36 laissant une ouverture en anneau importante entre elle et les bords de l'entrée 36, si bien qu'une grande masse de fluide à pression Po est admise dans la cavité 15.

Lorsque la vanne 30 est ouverte, la partie évasée 40 de la tête 37 se trouve dans l'entrée ne laissant libre qu'une ouverture en anneau de faible épaisseur, si bien qu'il ne se maintient qu'un débit réduit dans l'entrée 36. Ainsi la vitesse du clapet 13 qui est très rapide lors de l'ouverture de la vanne 30 se ralentit en fin de course lorsque la vanne 30 est complètement ouverte. Néanmoins le temps de fermeture du clapet reste très court.

Lorsqu'on ferme la vanne 30, la partie hémisphèrique 38 de la tête 37 venant s'appliquer sur l'entrée 36, et qu'on ouvre la vanne 34, le clapet 13 s'ouvre. Lorsque le clapet 13 est ouvert, on peut fermer la vanne 34, la canalisation de faible débit 35 suffisant à maintenir la cavité à la pression p2.

La vanne selon la figure 3 est munie d'une autre moyen 41 de réaliser le freinage de la partie mobile 11 en fin de fermeture. Cet autre moyen 41 comporte un anneau circulaire 42 fixé par un écrou 43 sur le prolongement, fileté, de la tige 12, formant ainsi un piston 44. Cet anneau mobile 42 pénètre, à partir d'une certaine course, dans un cylindre circulaire fixe 45 solidaire du fond 10 du corps interne de vanne.

Par le choix convenable:

—du pourcentage de course pour lequel l'anneau mobile 42 commence à pénétrer dans le cylindre fixe 45,

du jeu entre l'anneau mobile 42 et le cylindre fixe 45, il est possible de créer un effort s'opposant à l'effort d'aspiration du clapet, particulièrement élevé en fin de course.

Grâce à cet effet d'amortissement créé par la compression du matelas de gaz emprisonné centre l'anneau mobile 42 et le cylindre fixe 45, il est posible d'induire l'effort antagoniste nécessaire pour réduire la vitesse du clapet au moment du contact avec le siège à la valeur maxima admissible.

Dans la réalisation de la figure 3, on peut également employer le moyen de freinage 41 seul ou concurremment avec l'effet d'amortissement déjà décrit obtenu par la présence de la nervure 16.

Du point de vue pratique, le casque 21 du corps interne doit être rapporté sur le fond 10 afin que le montage de l'anneau 42 soit possible.

Cela peut être réalisé soit par une emmanchement avec serrage à chaud du casque 21 soit par un montage mécanique avec vis de fixation.

## Revendications

1. Vanne d'arrêt à fermeture rapide et à écoulement axial concentrique comportant:

un corps fixe (1) comprenant une entrée (2) de fluide compressible sous pression d'entrée (Po) et une sortie (3) de fluide compressible munie d'un siège (20),

une partie fixe (6) disposée à l'intérieur du corps (1) et reliée audit corps (1) par des nervures (7),

une partie mobile (11) coulissant selon l'axe dudit siège (20) en prenant appui sur la partie fixe (6) et venant s'appliquer par une surface d'obturation (13) sur ledit siège (20) en position de fermeture,

ladite partie mobile (11) définissant avec la partie fixe (6) une cavité (15) et étant soumise en permanence à une force ayant tendance à l'appliquer sur ledit siège (20),

cette cavité (15) pouvant être mise soit à la pression d'entrée (Po) à travers un orifice (27) ménagé dans une paroi de la partie fixe (6), soit à une pression (p2) inférieure à la pression d'entrée (Po),

cette pression inférieure (p2) étant suffisamment faible pour permettre le décollement de la partie mobile (11) dudit siège (20) afin de mettre la vanne en position d'ouverture,

la pression inférieure (p2) étant appliquée à la cavité (15) à travers une canalisation, la force ayant tendance à appliquer en permanence la partie mobile (11) sur son siège (20) étant obtenue au moins en partie par un système de ressorts (19) situés à l'intérieur de la cavité (15) et prenant appui à une extreémité sur la partie fixe (6) et à l'autre extrémité sur la partie mobile (11),

caractérisée en ce que la pression d'entrée (Po) est appliquée à la cavité (15) à travers une conduite fixe (29) qui comporte une vanne auxiliaire (30),

et en ce que la pression inférieure (p2) est appliquée à la cavité (15) à travers ladite canalisation qui est une autre conduite fixe (32) qui comporte une autre vanne auxiliaire (34),

ladite vanne auxiliaire (30) comportant une entrée de fluide (36) à la pression Po obturable par une tête mobile (37) qui comprend trois parties, notamment une partie hémisphérique (38) assurant l'obturation proprement dite de ladite entrée (36) lorsque la vanne auxiliaire (30) est fermée, une partie étanglée (39) qui, au cours de l'ouverture de la vanne auxiliaire (30), se déplace à travers ladite entrée (36) permettant un fort débit de fluide dans ladite entrée (36) et une partie évasée (40) qui se trouve dans ladite entrée (36) lorsque la vanne auxiliaire (30) est complètement ouverte permettant un débit réduit de fluide dans ladite entrée (36).

2. Vanne selon le préambule de la revendication 1 caractérisée en ce que ladite canalisation (23) est déplaçable en translation longitudinale par des moyens de commande (24 à 26), de manière que dans une position, ladite canalisation (23) est branchée sur ledit orifice (27) de la cavité (15), alors que dans l'autre position, ladite canalisation (23) communique avec la pression d'entrée (Po),

et en ce que la cavité (15) comporte deux chambres (17, 18), une première chambre (18) étant située dans la partie mobile (11) et une seconde chambre (17) comportant l'orifice (27) de la cavité (15), les deux chambres (17, 18) communiquant par une ouverture qui est obturée par un élément (8) de la partie fixe (6) lorsque la partie mobile (11) est dans la position ouverture et qui est dégagée, au cours du coulissement de la partie mobile (11), dans une position située entre la position ouverture et la position fermeture.

3. Vanne selon le préambule de la revendication 1 caractérisée en ce que la pression d'entrée (Po) est appliquée à la cavité (15) à travers une conduite fixe (29) qui comporte une vanne auxiliaire (30),

en ce que la pression inférieure (p2) est appliquée à la cavité (15) à travers ladite canalisation qui est une autre conduite fixe (32) qui comporte une autre vanne auxiliaire (34),

et en ce que la cavité (15) comporte deux chambres (17, 18), une première chambre (18) étant située dans la partie mobile (11) et une second chambre (17) comportant l'orifice (27) de la cavité (15), les deux chambres (17, 18) communiquant par une ouverture qui est obturée par un élément (8) de la partie fixe (6) lorsque la partie mobile (11) est dans la position ouverture et qui est dégagée, au cours du coulissement de la partie mobile (11), dans une position située entre la position ouverture et la position fermeture.

4. Vanne selon l'une des revendications 1 ou 3, caractérisée en ce qu'une canalisation de faible débit (35) est mise en dérivation entre l'entrée et la sortie de l'autre vanne auxiliaire (34).

5. Vanne d'arrêt selon l'une des revendications précédentes, caractérisée en ce que la paroi externe du groupement constitué par la partie fixe (6) et par la partie mobile (11) a une forme aérodynamique.

6. Vanne d'arrêt selon l'une des revendications précédentes, caractérisée en ce que la tige (12) de la partie mobile (11) est munie à son extrémité d'un piston (44) formant dashpot de fin de course avec un cylindre (45) solidaire d'un fond (10) interne et transversal de la partie fixe (6).

**Patentansprüche**

1. Schnell schließendes Absperrventil mit konzentrischer axialer Strömung, das aufweist:

einen festen Körper (1) mit einem Eingang (2) für ein kompressibles Fluid mit dem Eingangsdruck (Po) und einem Ausgang (3) für das kompressible Fluid, der einen Sitz (20) aufweist,

einen feststehenden Teil (6), der sich im Inneren des Körpers (1) befindet und mit dem Körper (1) über Rippen (7) verbunden ist,

einen beweglichen Teil (11), der entlang der Achse des Sitzes (20) gleitet, indem er sich auf dem festen Teil (6) abstützt und sich mit einer Verschlußfläche (13) auf dem Sitz (20) in Verschlußstellung auflegt,

wobei der bewegliche Teil (11) mit dem feststehenden Teil (6) einen Hohlraum (15) bildet und permanent einer Kraft unterworfen ist, die ihn auf den Sitz (20) drückt,

wobei dieser Hohlraum (15) entweder auf den Eingangsdruck (Po) durch eine Öffnung (27) in einer Wand des feststehenden Teils (6) oder auf einen Druck (p2) gebracht werden kann, der geringer ist als der Eingangsdruck (Po),

wobei dieser geringere Druck (p2) niedrig genug ist, um das Abheben des beweglichen Teils (11) vom Sitz (20) zu erlauben, um das Ventil in Öffnungsstellung zu bringen.

wobei der niedrigere Druck (p2) in den Hohlraum (15) durch einen Kanal gelangt und die Kraft, die den beweglichen Teil (11) permanent auf seinen Sitz (20) drücken will, mindestens teilweise durch ein System von Federn (19) erhalten wird, die sich im Inneren des Hohlraums (15) befinden und sich mit einem Ende auf dem feststehenden Teil (6) und mit dem anderen Ende auf dem beweglichen Teil (11) abstützen,

dadurch gekennzeichnet, daß der Eingangsdruck (Po) in den Hohlraum (15) durch eine feste Leitung (29) gelangt, die ein Hilfsventil (30) aufweist,

und daß der niedrigere Druck (p2) in den Hohlraum (15) durch den Kanal gelangt, der als weitere feste Leitung (32) ausgebildet ist und ein weiteres Hilfsventil (34) aufweist, wobei das Hilfsventil (30) einen Fluideingang (36) mit dem Druck Po aufweist, der durch einen beweglichen Kopf (37) verschlossen werden kann, welcher drei Bereiche aufweist, insbesondere einen halbkugelförmigen Bereich (38), der den eigentlichen Verschluß des Eingangs (36) bewirkt, wenn das Hilfsventil (30) geschlossen ist, einen verengten Bereich (39), der sich während der Öffnung des Hilfsventils (30) durch den Eingang (36) bewegt und einen starken Fluiddurchsatz in diesem Eingang (36) ermöglicht, und einen erweiterten Bereich (40), der sich in diesem Eingang (36) befindet, wenn das Hilfsventil (30) völlig offen ist, und einen reduzierten Fluiddurchsatz in diesem Eingang (36) ermöglicht.

2. Ventil nach dem Oberbegriff des Anspruchs 1, dadurch gekennzeichnet, daß der Kanal (23) durch Steuermittel (24 bis 26) in Längsrichtung bewegt werden kann, so daß in einer Stellung der Kanal (23) mit der Öffnung (27) des Hohlraums (15) verbunden ist, während in der anderen Stellung dieser Kanal (23) mit dem Eingangsdruck (Po) beaufschlagt ist, und daß der Hohlraum (15) zwei Kammern (17, 18) aufweist, nämlich eine erste Kammer (18), die sich im beweglichen Teil (11) befindet und eine zweite Kammer (17), die die Öffnung (27) des Hohlraums (15) enthält, wobei die beiden Kammern (17, 18) über eine Öffnung miteinander verbunden sind, die durch ein Element (8) des feststehenden Teils (6) verschlossen wird, wenn der bewegliche Teil (11) sich in der Öffnungsstellung befindet, und die während des Gleitens des beweglichen Teils (11) in einer Stellung frei wird, die sich zwischen der Öffnungsstellung und der Verschlußstellung befindet.

3. Ventil nach dem Oberbegriff des Anspruchs 1, dadurch gekennzeichnet, daß der Eingangsdruck (Po) an den Hohlraum (15) über eine feste Leitung (29) angelegt wird, die ein Hilfsventil (30) aufweist,

daß der niedrigere Druck (p2) in den Hohlraum (15) über den Kanal gebracht wird, der eine weitere feste Leitung (23) ist, die ein weiteres Hilfsventil (34) aufweist,

und daß der Hohlraum (15) zwei Kammeren (17, 18) aufweist, nämlich eine erste Kammer (18), die sich im beweglichen Teil (11) befindet, und eine zweite Kammer (17), die die Öffnung (27) des Hohlraums (15) enthält, wobei die beiden Kammern (17, 18) über eine Öffnung miteinander verbunden sind, die durch ein Element (8) des feststehenden Teils (6) verschlossen wird, wenn der bewegliche Teil (11) sich in der Öffnungsstellung befindet, und die während des Gleitens des beweglichen Teils (11) in einer Stellung frei wird, die sich zwischen der Öffungsstellung und der Verschlußstellung befindet.

4. Ventil nach einem der Ansprüche 1 oder 3, dadurch gekennzeichnet, daß ein Kanal mit geringem Durchsatz (35) zwischen den Eingang und den Ausgang des weiteren Hilfsventils (34) abgeleitet wird.

5. Absperrventil nach einem der vorhergehenden Ansprüche, dadurch gekennzeichnet, daß die äußere Wand der aus dem feststehenden Teil (6) und dem beweglichen Teil (11) gebildeten Einheit eine aerodynamische Form hat.

6. Absperrventil nach einem der vorhergehenden Ansprüche, dadurch gekennzeichnet, daß der Stößel (12) des beweglichen Teils (11) an seinem Ende einen Kolben (44) aufweist, der einen Dämpferanschlag mit einem Zylinder (45) bilet, der fest mit einem inneren Querboden (10) des feststehenden Teils (6) verbunden ist.

## Claims

1. A fast-closing shutoff valve with a concentric axial flow, comprising:

a stationary body (1) comprising an inlet (2) for compressible fluid under inlet pressure (Po) and an outlet for compressible fluid (3) supplied with a seat (20),

a stationary part (6) disposed inside the body (1) and connected to said body (1) by ribs (7),

a movable part (11) sliding along the axis of said seat (20), resting on the stationary part (6) and resting by an obturation surface (13) on said seat (20) in the closed position,

said movable part (11) defining a cavity (15) with the stationary part (6) and being permanently submitted to a force tending to apply it on said seat (20),

this cavity (15) being apt to be brought either to the inlet pressure (Po) through an orifice (27) in a wall of the stationary part (6), or to a pressure (p2) which is lower than the inlet pressure (Po),

this lower pressure (p2) being sufficiently low to permit the lifting of the movable part (11) from said seat (20) in order to put the valve into the open position,

the lower pressure (p2) being applied to the cavity (15) through a channel, the force tending to permanently apply the movable part (11) to its seat (20) being obtained at least in part by a system of springs (19) situated inside the cavity (15) and backed-up at one end by the stationary part (6) and at the other end by the movable part (11),

characterized in that the inlet pressure (Po) is applied to the cavity (15) through a stationary duct (29) which comprises an auxiliary valve (30),

and in that the lower pressure (p2) is applied to the cavity (15) through said channel which is constituted by another stationary duct (32) which comprises another auxiliary valve (34),

said auxiliary valve (30) comprising a fluid inlet (36) at the pressure Po which can be closed by a movable head (37), this head comprising three parts, in particular a hemispherical part (38) ensuring the actual closing of said inlet (36) when said auxiliary valve (30) is closed, a constricted part (39) which, during the opening of the auxiliary valve (30), moves through said inlet (36), permitting a strong fluid flow in said inlet (36), and a widened part (40) which is situated in said inlet (36) when the auxiliary valve (30) is completely open, permitting a reduced fluid flow in said inlet (36).

2. A valve according to the preamble of claim 1, characterized in that said channel (23) can be displaced in longitudinal direction by control means (24 to 26) so that in one position, said channel (23) communicates with said orifice (27) of the cavity (15), whereas in the other position, said channel (23) communicates with the inlet pressure (Po), and in that the cavity comprises two chambers (17, 18), a first chamber (18) being situated in the movable part (11) and a second chamber (17) comprising the orifice (27) of the cavity, the two chambers (17, 18) intercommunicating by an opening which is closed by an element (8) of the stationary part (6) if the movable part (11) is in the open position, and which is freed, during the sliding of the movable part, in a position situated between the opening and the closing position.

3. A valve according to the preamble of claim 1, characterized in that the inlet pressure (Po) is applied to the cavity (15) through a stationary duct (29) which comprises an auxiliary valve (30),

in that the lower pressure (p2) is applied to the cavity (15) through said channel which is another stationary duct (32) and which has another auxiliary valve (34),

and in that the cavity (15) compriss two chambers (17, 18), a first chamber (18) being situated in the movable part (11) and a second chamber (17) comprising the orifice (27) of the cavity, the two chambers (17, 18) intercommunicating by an opening which is closed by an element (8) of the stationary part (6) if the movable part (11) is in the open position, and which is freed, during the sliding of the movable part, in a position situated between the opening and the closing position.

4. A valve according to one of claims 1 or 3, characterized in that a channel with low flow rate (35) by-passes the inlet and the outlet of the other auxiliary valve (34).

5. A shutoff valve according to one of the preceding claims, characterized in that the outer wall of the group constituted by the stationary part (6) and by the movable part (11) has an aerodynamic shape.

6. A shutoff valve according to one of the preceding claims, characterized in that the rod (12) of the movable part (11) is supplied at its end with a piston (44) forming end of course dashpot with a cylinder (45) fixed to a transversal inner bottom (10) of the stationary part (6).

EP 0 066 795 B2

FIG.1

1

FIG.2

EP 0 066 795 B2

FIG.3

EP 0 066 795 B2